# EUROPEAN PATENT APPLICATION

(11) **EP 3 624 281 A1**
(43) Date of publication of application: **18.03.2020**
(21) Application number: 18194797.9
(22) Date of filing: 17.09.2018
(51) Int. Cl.: H02B 11/02

(54) **INTEGRATED MODULAR SYSTEM FOR WITHDRAWABLE SWITCHGEAR**

(71) Applicant: Microelettrica Scientifica S.p.A., 20090 Buccinasco (Milano) (IT)
(72) Inventor: BURBERI, Massimo, 20131 Milano (IT)
(74) Representative: Prüfer & Partner mbB Patentanwälte · Rechtsanwälte

(57) **Abstract**

The present invention relates to a modular integrated system (1) of a driving unit for electro-mechanical devices (6) for industrial and railways application comprising a modular connections backbone (2), the modular connections backbone (2) comprising at least an input electrical power conductor (4), at least an output electrical power conductor (5), at least one fast-on connecting terminal (3) suitable for being connected to at least one corresponding fast-on connecting terminal (7) on the electro-mechanical devices to be integrated. The modular integrated system (1) further comprises a modular case (8), this modular case comprising at least two frames (12) and at least two connecting beams (13), in order to form customized containing space for the electro-mechanical devices (6).

## Description

### Technical field

The present invention relates to an integrated system of a driving unit for electro-mechanical devices in order to achieve quick specific manufacturing.

More specifically, but not exclusively, the invention relates to integrated systems to be used in industrial application in general, or, more specifically in the railways field.

### Known Art

As it is well known in this specific technical filed, each industrial application involving the driving and control of electro-mechanical devices has different needs and has different requirements in terms of number of devices incorporated into a driving unit or in terms of complexity of the electrical interconnections of these devices.

These requirements are generally different regarding the electrical circuits, which could be different in terms of quality, capacity, security criteria or in terms of their interconnection for a specific application.

For this reason, it is necessary to implement different electro-mechanical driving units for electro-mechanical devices or components in order to satisfy all these requirements. The electro-mechanical devices to be incorporated into a driving unit could be switches, contactors, disconnectors, current or voltage meters, etc. which need to be mounted in a specific configuration in order to obtain the desired global operation.

It is also possible that it is necessary to implement a portion of driving unit including an electrical circuit designed to be interconnected within a pre-existent global circuit. In all these cases one critical requirement is often the space in which the whole circuit or the portion of circuit must be housed.

In this content is substantially impossible to keep a catalogue of driving units including all the electro-mechanical devices and components needed for each particular client's request. On the contrary, it is often necessary to provide a specific design giving to each driving unit a specific structure, carrying out for each case operative tests and structural tests with software programs such as the Finite Element Analysis that could require relevant computational times.

Clearly the need to meet all the client's request in order to comply with a specific design, performing accurate tests with relative corrections and repetitions phases renders the manufacturing process considerably time-consuming.

Despite of the undoubted advantages provided by this consolidated manufacturing process, which allows to provide driving units with perfectly fitted circuits or circuit portions for each specific case, there are evident drawbacks due to the necessary manufacturing times which are often not in line with the client's expectation.

The technical problem underlining the present invention is that of providing a driving unit having structural and functional features to allow a quick specific design and manufacturing of any kind of electrical circuits.

Another aim of the present invention is to provide a standardization of manufacturing process of such a driving unit.

Another object of the present invention is that of guarantee a simple maintenance of the circuit portions incorporated into such a driving unit.

Another aim of the present invention is to use assembly technique suitable for allowing quick circuit assembly and disassembly operations.

A further object of the present invention is that of avoiding the extra use of software computational means such as the Finite Element Analysis with the related time-consuming computational times.

Another object of the present invention is that of minimize the quantity of material used for the realization of driving unit or the specific circuits inside.

A further aim of the present invention is that of providing a solution which can be mounted in any location inside the specific industrial application, thus allowing the optimization of allowable space.

Finally, an object of the present invention is to provide an optimized solution for the mass production of industrial driving and control units following an assembly line standard flow.

### Summary of the invention

The solution idea at the basis of the present invention is that of providing an integrated system within which electrical functional subsystems or standard devices can be connected in different configurations to comply with most of the specific requests for operation of the whole driving and control unit system.

In particular, in railways application this solution is particularly suitable for the design of different current collector systems, different propulsion systems, different auxiliary circuit supply systems and/or different passenger heating systems. However, these applications should not be considered limitative for the present invention.

According to the above solution idea, the technical problem is solved by a modular integrated system of driving and/or control unit for electro-mechanical devices, in particular for industrial and railways application, comprising at least a modular connections backbone, the modular connections backbone comprising at least an input electrical power conductor, at least an output electrical power conductor and at least one fast-on connecting terminal suitable for being connected to at least one corresponding fast-on connecting terminal on the electro-mechanical devices to be integrated.

The modular integrated system further comprises a modular case comprising at least two frames and at least two connecting beams, in order to form customized containing space for the electro-mechanical devices. The modular structure of the connections backbone and of the case allow obtaining specific configurations for the different application requirements, maintaining a standard design of all devices which can be interconnected in different ways.

Preferably the modular integrated system of electro-mechanical devices further comprises a modular rear structure and a modular front structure.

Advantageously, in that way, it is possible to generate different spaces for the electro-mechanical devices housed according to the requirements of the global circuit system and for the supports that sustain the electrical connections and terminals system still according to the requirements of the global circuit system.

According to a particular aspect of the invention the modular case comprises a track system, in order to insert the electro-mechanical devices in a drawer way.

This particular aspect allows a quick assembly and disassembly of the electrical circuit and brings a time advantage also during the phase of maintenance or substitution of a single device.

Moreover, advantageously, the case comprises at least a closing panel.

According to this invention, especially thanks to the ease to assembly and disassembly the devices, said panel can be a flat pre-painted panel.

Advantageously, this aspect allows a simplification during the design phase which considers also the manufacture aspects.

Preferably, the modular case is assembled with "glue and screw" technique.

Advantageously, thanks to this aspect, the assembly is easy and cheap without the needs to use particular welding.

According to another aspect of the invention, the modular case comprises a fixing system, in order to connect the modular case and the modular integrated system in any location configuration.

Advantageously this allows to locate the modular integrated system in all possible locations. For example, in railways application, it is often required to mount the electrical circuit "over-roof' or "sub-cash" of the train, and the fixing system allows to choose the best configuration to optimize the internal space, and also to change the location of the circuit at a later time without particular design modifications.

Preferably, the modular case comprises insulated panels between the electro-mechanical devices, in order to maintain operative independence between these devices.

According to another aspect of the present invention, the modular integrated system of electro-mechanical devices comprises an external sealing O-ring in order to seal from liquids extractable electro-mechanical devices.

Finally, it must be noted that one or more modular integrated systems can be implemented on any electrical assembly without to depart from the scope of the present invention.

Further features and advantages of an integrated modular system of driving and/or control unit according to the present invention will appear from the following description given by way of not limiting example with reference to the enclosed drawings figures.

### Brief description of the drawings

- Figure 1 shows a schematic and perspective view of an integrated system of driving and/or control unit for electro-mechanical devices realized according to the present invention;
- Figure 2 shows an exploded view of integrated system of Figure 1;
- Figure 3 shows another exploded view of integrated system of Figure 1;
- Figure 4 shows a particular view of a modular case of the integrated system of Figure 1;
- Figure 5 shows a schematic and perspective view of the integrated system of Figure 1 with closing panels;
- Figure 6 shows a schematic and perspective view of the case of the integrated system of Figure 1 with a fixing system.

### Detailed description

With reference to the drawings figures, with 1 is globally and schematically shown a modular integrated system of driving and/or control unit for electro-mechanical devices, realized according to the present invention.

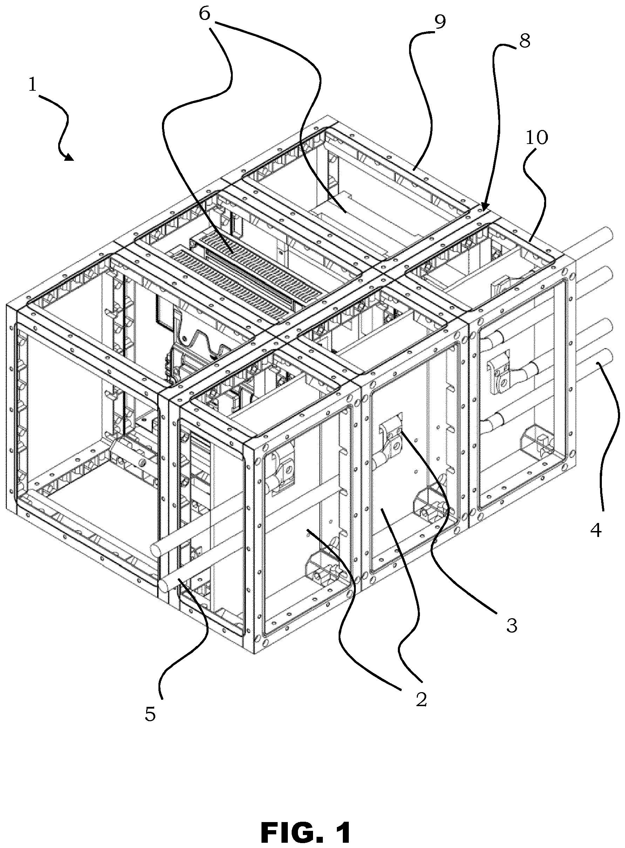

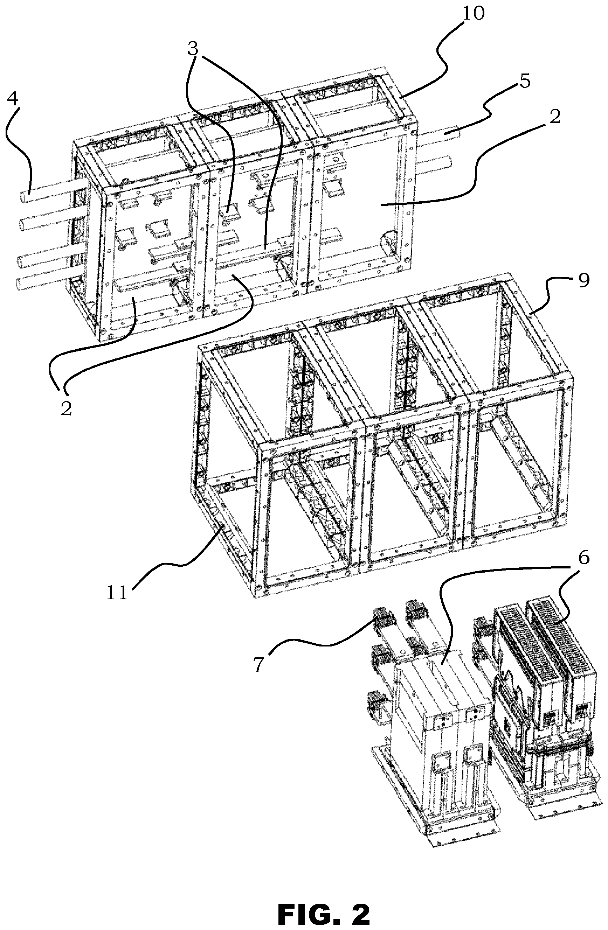

In the specific embodiment shown in the figures, with particular reference to figures 1 and 2, it is shown a supporting board or plate that we will call hereinafter as connections backbone 2. The connections backbone 2 comprises fast-on connecting terminals 3 and relative electrical connections according to the requirements of the specific electrical circuit. For the purpose of the present invention, the fast-on connecting terminals may be male or female mechanical and/or electrical connectors without departing from the principle of the present invention.

Furthermore, the connections backbone 2 comprises at least an input electrical power conductor 4 and at least an output electrical power conductor 5.

At least an electro-mechanical subsystem 6 is connected to the connections backbone 2.

The electro-mechanical subsystem 6 can be an active driving device such as a switch, a changeover type switch, a disconnector, a contactor, a current or a measuring device such as a voltage sensor, or other electro-mechanical devices, particularly suitable for railway applications in which, for example, a high direct current must be switched on and off with switching actions, in particular to protect and/or set-up the passengers heating system and other electrical loads mounted on board of the rolling stock.

The fast-on connecting terminals 3 and the relative electrical connections according to the requirements of the global circuit system are adapted to be connected with corresponding fast-on connecting terminals 7 of the electro-mechanical subsystem 6.

The fast-on connecting terminals 7 are specific for high-current applications on moving devices, ensuring a stable connection even in the presence of significant vibrations, but allowing, at the same time, a quick attach or fixing and detachment when desired, to facilitate the operations of implementation and maintenance of the system as a whole and of its individual devices.

The connections backbone 2 is modular in order to allow the implementation of different circuit configurations with different requirements in terms of devices and in terms of space, with an optimization comparable to that guaranteed by a customized design for each specific application.

Preferably, the connections backbone 2 is formed by at least one panel made of insulated material. In this way, electrical interferences between devices operations are avoided.

Moreover, the input electrical power conductor 4 and the output electrical power conductor 5 are electrical connections bars, which guarantee a stable connection of the electrical circuit.

The modular integrated system 1 further comprises a modular case 8 that houses both the modular connections backbone 2 and the electro-mechanical subsystems 6.

In the described exemplary embodiment, the modular integrated system 1 comprises a modular front structure 9 and a modular rear structure 10.

The spaces formed by the modular front structure 9 and consequently also those of the modular rear structure 10, can be different or equal to each other being both easily assembled according to different specifications.

Inside the spaces of the front modular structure 9, electro-mechanical devices or subsystems 6 are housed according to the requirements of the global circuit system.

Inside the spaces of the rear modular structure 10 is housed the connections backbone 2 comprising fast-on connecting terminals 3 and relative electrical connections according to the requirements of the specific electrical circuit, and the input and output electrical power conductors 4, 5.

As it is visible in particular in Figure 2, the modular case 8 further comprises, in the represented exemplary embodiment, a track system 11, in order to insert said electro-mechanical devices 6 in a drawer way.

In a preferred embodiment, the track system 11 is realized by a Nylon glide which allows the devices 6 to slide towards and away from the connections backbone 2.

This solution makes simple the operations of assembly and disassembly of the modular integrated system 1, in particular during maintenance operations.

Nothing clearly refrains to use different insertion modes of the devices 6 inside the modular case 8, without to depart from the scope defined by alleged claims.

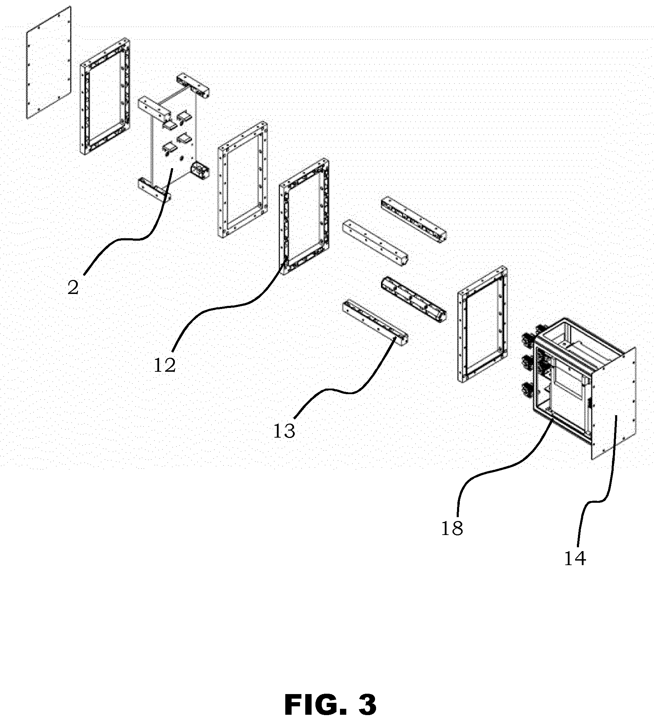

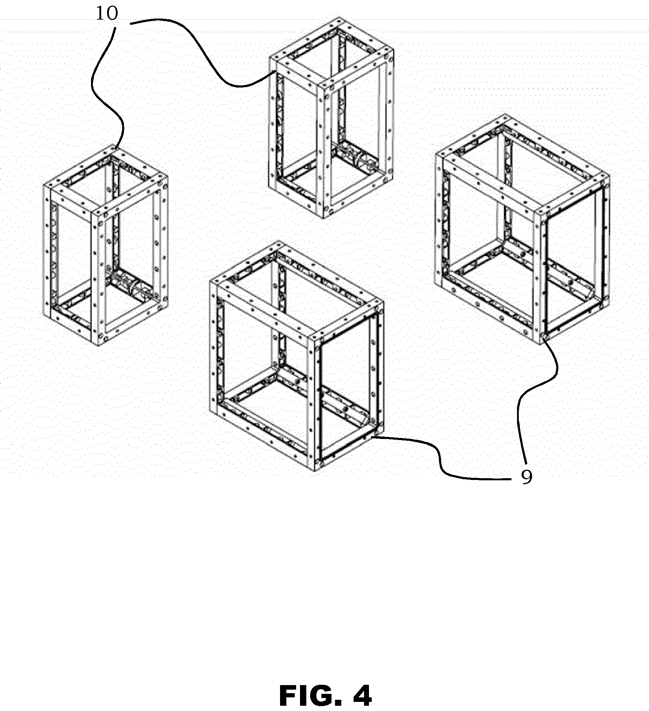

As it shown in Figure 3, the modular case 2 is realized by at least two frames 12 connected by at least two connecting beams 13. This type of structure, as shown in Figure 4, allows a complete modularity of the modular case 8 which can be adapted to all different configuration and location.

In addition, in Figure 3, it is shown a structure adapter 18 with box shaped openings on its sides, which facilitates a straight and right sliding of the electro-mechanical devices 6 inside the modular case 8 towards and away from the connections backbone 2.

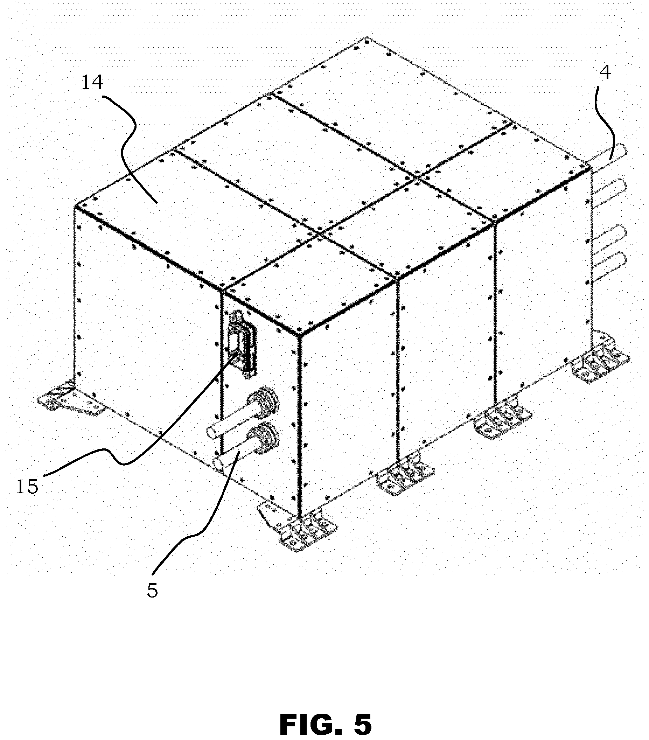

Moreover, in the represented exemplary embodiment, the modular case 8 comprises, as shown in Figure 5, at least one closing panel 14, that is preferably a flat pre-painted panel. In this way the internal devices are protected from external factors.

Furthermore, in Figure 5, it is possible to see a connector 15. This connector 15 allows to connect Low-Voltage signal cables (not shown) that pass inside the modular case 8 to external devices.

Preferably, the connection between frames 12, connecting beams 13 and closing panels 14 is realized through a "glue and screw" technique, avoiding particular welding but contemporary allowing to withstand to railway environmental stresses.

However, nothing refrains to use the same modular case 8 connected by welding.

Moreover, in a preferred embodiment, the modular case 8 further comprises insulated panels (not shown) between the electro-mechanical devices 6. This solution guarantees to maintain operative independence between these devices 6 and a correct global circuit operation.

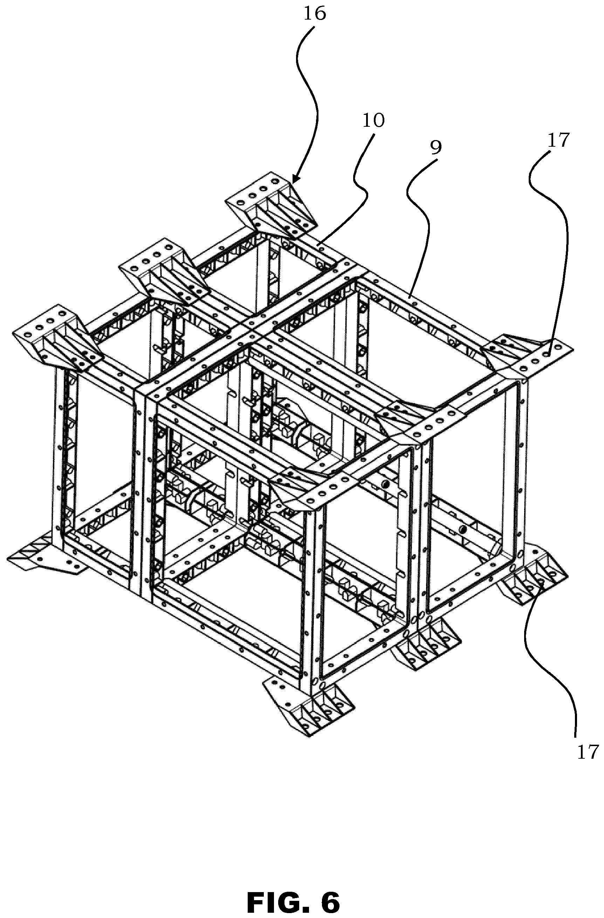

Figure 6 shows also a fixing system 16 that allows to connect the whole of the front modular structure 9 and of the rear modular structure 10, and therefore the whole modular frame 8, both in an "over-roof configuration and in a "sub-cash" configuration according to the different needs. Different wall mounting configurations are clearly possible using the same fixing system 16.

The fixing system 16 is realized in the present embodiment through at least two brackets 17 which are differently located on the modular case 8 depending on the location configuration required. This possibility is clearly useful in the optimization of the spaces, which are strictly defined especially in same industrial application and in particular in railways application.

Other configurations are possible without to depart from the scope of protection defined from the alleged claims.

Furthermore, in a preferred embodiment, the modular integrated system 1 further comprises an external sealing O-ring (not shown) in order to seal the extractable electro-mechanical devices 6 from liquids. Clearly, it is a further protection for the integrated system 1.

The present invention can be adopted to form different electrical systems.

In particular, in railways application, different electrical functional subsystems can be used, connected to the connections backbone 2.

In particular, it is possible to implement the configuration of electro-mechanical devices in a current metering application.

In this application, the modular integrated system 1 comprises at least two current meters or at least two voltage meters.

This configuration allows to control the design operation of the whole electrical circuit. This circuit is generally connected to a switch or to a contactor in order to interrupt the current flow between two terminal poles of the circuit and to protect the circuit from over-voltages, over-currents and harmonics.

It is also possible to implement a configuration of electro-mechanical devices in an engine protection application, in particular an application of input filter to an engine drive inverter.

In this application, the modular integrated system 1 comprises at least a contactor or at least a disconnector.

In this case the modular integrated system 1 with relative devices forms an EMC filter together with filter capacitors and filter inductances, connected in series between a power supply 16 and the engine drive inverter 1.

This filter configuration allows the inverter to be protected against electromagnetic interference from the outside, avoiding damage and ensuring compliance with current regulations.

It is also possible to implement a configuration of electro-mechanical devices in auxiliary service configuration in medium tri-phase voltage.

In this application, the modular integrated system 1 comprises at least a 4-pole disconnector, suitably connected to loads and to static groups of auxiliary services, and preferably also with contactors in order to protect the circuit from malfunctions.

It is also possible to implement a configuration of electro-mechanical devices in a current collector application.

In this application, the modular integrated system 1 comprises at least a current meter and preferably also switches in order to protect the circuit from malfunctions.

This circuit allows to carry electrical power from electrical third rails to the electrical equipment of the vehicles.

It is also possible to implement a configuration of electro-mechanical devices in a heating, ventilation and air conditioning (HVAC) application.

In this application, the modular integrated system 1 comprises a parallelly mounted contactor group, at least a resistance and at least a contactor.

The parallelly mounted contactor group is connected to relative parallelly connected resistances.

Also in this case, the whole circuit generally comprises a general switch in order to protect the circuit from malfunctions.

This circuit, normally controlled by 24 volts, passes line voltage to a motor or a compressor.

Through the different applications, the common concept is based on the identification and implementation of the "basic" function modules whose configuration is optimized in order to realize the complex functions, also identified, and on the concept of mechanically and electrically connecting these functional modules in a simple and predefined way on the connections backbone, inside which the specific connections of the single application are made.

Advantageously, the present invention makes it possible to speed up the construction phase of a complex circuit system for each specific application case, shortening the ad hoc design phase, and having a consequent impact in terms of time.

Another advantage is due to the fact that the maintenance of the circuit is clearly simple. In fact, it is necessary only to disconnect the interested devices providing with the maintenance or the substitution.

Another advantage is due to the avoiding the extra use of software computational means such as the Finite Element Analysis with the related computational times. It is not advantageous only in terms of time but also in terms of minimum computational capability requested in the design phase.

It is also simple to assemble and disassemble the whole integrated modular system of driving and control unit, using it in another application without problems of incompatibility.

Moreover, advantageously, the present solution allows a standardization of manufacturing process, guaranteeing an optimized solution for the mass production following an assembly line standard flow.

Another advantage of the present invention is that the quantity of material used for the realization of specific circuits is minimized, optimizing in a preliminary phase the distance between the connections.

Moreover, the present solution can be mounted in any location inside the specific industrial application, guaranteeing the optimization of allowable space.

Still advantageously, the case structure allows a simple sliding of the devices towards and away from the connections backbone. Moreover, this case structure is simple to design and to be optimized in a comparable way with a customized design starting from scratch.

Another advantage of the present invention is the possibility to be applied in any electrical assembly which requires an integrated system.

Finally, another advantage of the present invention is that it is clearly very competitive also from an economic point of view.

In the previous lines the directional terms like: "forward", "rearward", "front", "rear", "up", "down", "above", "below", "upward", "downward", "top", "bottom", " side", "vertical", "horizontal", "perpendicular" and "transverse" as well as any other similar directional terms refer just to the device as shown in the drawings and do not relate to a possible use of the same device. Accordingly, these directional terms, as utilized to describe the contactor in its upright vertical position on a horizontal surface have just the meaning to identify a portion of the device with respect to another portion as shown in the figures.

The term "comprising" and its derivatives, as used herein, are intended to be open ended terms that specify the presence of the stated features, elements, devices, groups, integers, and/or steps, but do not exclude the presence of other unstated features, elements, devices, groups, integers and/or steps. This concept also applies to words of similar meaning, for example, the terms "have", "include" and their derivatives.

Moreover, the terms "member", "section", "portion", "part" and "element" when used in the singular can have the dual meaning of a single part or a plurality of parts.

## Claims

1. Modular integrated system (1) of a driving unit for electro-mechanical devices (6), in particular for industrial and railways application, comprising at least a modular connections backbone (2), said modular connections backbone (2) comprising:
- at least an input electrical power conductor (4);
- at least an output electrical power conductor (5);
- at least one fast-on connecting terminal (3) suitable for being connected to at least one corresponding fast-on connecting terminal (7) on said electro-mechanical devices to be integrated;
**characterized in that** said modular integrated system (1) further comprises a modular case (8), said modular case (8) comprising at least two frames (12) and at least two connecting beams (13) connecting the frames (12), in order to form customized containing space for said electro-mechanical devices (6).

2. Modular integrated system (1) of a driving unit for electro-mechanical devices (6) according to claim 1, wherein said modular case (8) further comprises a modular front structure (9) and a modular rear structure (10).

3. Modular integrated system (1) of a driving unit for electro-mechanical devices (6) according to claim 1 or 2, wherein said modular case (8) comprises a track system (11), in order to insert said electro-mechanical devices (6) in a drawer way.

4. Modular integrated system (1) of a driving unit for electro-mechanical devices (6) according to any one of previous claims, wherein said modular case (8) comprises a fixing system (16), in order to connect said modular integrated system (1) in any location configuration.

5. Modular integrated system (1) of a driving unit for electro-mechanical devices (6) according to any one of previous claims, wherein said modular case (8) further comprises at least a closing panel (14).

6. Modular integrated system (1) of a driving unit for electro-mechanical devices (6) according to claim 5, wherein said closing panel (14) is a flat pre-painted panel.

7. Modular integrated system (1) of a driving unit for electro-mechanical devices (6) according to any one of previous claims, wherein said modular case (8) is configured to be assembled with "glue and screw" technique.

8. Modular integrated system (1) of a driving unit for electro-mechanical devices (6) according to any one of previous claims, wherein said modular case (8) further comprises insulated panels between said electro-mechanical devices (6).

9. Modular integrated system (1) of a driving unit for electro-mechanical devices (6) according to any one of previous claims, further comprising at least one external sealing O-ring in order to seal said electro-mechanical devices (6) from liquids.

10. Electrical assembly comprising at least a modular integrated system (1) of electro-mechanical devices (6) according to any one of claims 1 to 9.
